**Europäisches Patentamt**

**European Patent Office**

**Office européen des brevets**

(11) Veröffentlichungsnummer: **0 428 918 A1**

# EUROPÄISCHE PATENTANMELDUNG

(21) Anmeldenummer: **90120953.6**

(22) Anmeldetag: **31.10.90**

(51) Int. Cl.⁵: **C02F 1/70, C22B 3/00, C25C 1/20, C25C 1/16**

(30) Priorität: 05.01.90 DE 4000216
17.11.89 DE 3938301

(43) Veröffentlichungstag der Anmeldung:
**29.05.91 Patentblatt 91/22**

(84) Benannte Vertragsstaaten:
**AT BE CH DE DK ES FR GB GR IT LI LU NL SE**

(71) Anmelder: **WUE UMWELT-ENGINEERING GmbH
Stresemannstrasse 80**

**W-4100 Duisburg 1(DE)**

(72) Erfinder: **Decker, Karl-Heinz
Annastrasse 3
W-4170 Geldern(DE)**

(74) Vertreter: **Herrmann-Trentepohl, Werner,
Dipl.-Ing. et al
Herrmann-Trentepohl, Kirschner, Grosse,
Bockhorni & Partner Forstenrieder Allee 59
W-8000 München 71(DE)**

(54) **Verfahren und Vorrichtung zur Abscheidung und Rückgewinnung hochwertiger Metalle, insbesondere von Edelmetallen und Quecksilber, aus gebrauchten Lösungen.**

(57) Die Erfindung betrifft ein Verfahren und eine Vorrichtung zur Abscheidung und Rückgewinnung hochwertiger Metalle, insbesondere von Edelmetallen und Quecksilber, aus gebrauchten sowie schwermetallhaltigen Lösungen durch Elektrolyse und Zementation, bei dem die metallhaltige gebrauchte Lösung in einen Absetzbehälter (1) eingeführt und die nach der Phasentrennung entstehende homogene Lösung in einen geschlossenen Abscheidereaktor (5) überführt wird, in dem die in der Lösung enthaltenen Metalle elektrolytisch und durch Zementation unter dem Einfluß von zwei Elektroden (8, 9), an die eine Gleichspannung angelegt ist, abgeschieden wird, wonach die von den Metallen befreite Lösung nach Durchlaufen eines Sicherheitsfilters (12) in einem Speicherbehälter zwischengelagert und dann verworfen wird.

Fig. 1

# VERFAHREN UND VORRICHTUNG ZUR ABSCHEIDUNG UND RÜCKGEWINNUNG HOCHWERTIGER METALLE, INSBESONDERE VON EDELMETALLEN UND QUECKSILBER, AUS GEBRAUCHTEN LÖSUNGEN

Die Erfindung betrifft ein Verfahren zur Abscheidung und Rückgewinnung hochwertiger Metalle, insbesondere von Edelmetallen und Quecksilber, aus gebrauchten sowie schwermetallhaltigen Lösungen durch Zementation und Elektrolyse sowie eine Vorrichtung zur Durchführung dieses Verfahrens.

In der Industrie sowie in Gewerbe- und Kleinbetrieben fallen zunehmend gebrauchte Lösungen an, in denen sich u. a. hochwertige Metalle, insbesondere Edelmetalle, wie z. B. Silber und Quecksilber in gelöster Form befinden. Zur Entsorgung dieser Lösungen ist es aus ökologischen Gründen erforderlich, die in der Lösung befindlichen Metalle möglichst weitgehend abzuscheiden, bevor die Lösung verworfen oder wiederverwendet wird. Dies kann durch Anwendung unterschiedlicher Verfahren bewirkt werden, die zum Teil auch miteinander kombinierbar sind, beispielsweise durch chemische Fällung, durch Ionenaustausch, durch Zementation und/oder Elektrolyse.

Da hochwertige Metalle, insbesondere Edelmetalle und Quecksilber, auch einen beträchtlichen wirtschaftlichen Wert darstellen, wird neben der Abscheidung auch eine weitgehende Rückgewinnung und Wiederverwertung dieser Metalle angestrebt.

Nach dem derzeitigen Stand der Technik läßt sich die Abscheidung und Rückgewinnung derartiger Metalle aus gebrauchten Lösungen am besten durch eine Kombination aus Zementation und Elektrolyse erreichen. Bei Anwendung dieser Verfahrensmaßnahmen fallen keine mit hochwertigen Metallen, insbesondere Edelmetallen und Quecksilber, belasteten Abfälle, wie z. B. Schlämme (chemische Fällung) oder Austauscherharze (Ionenaustausch) an, die bei der Ablagerung oder Sonderabfalldeponien eine erhebliche Umweltgefahr darstellen.

Nach einem Vorschlag in der DE-OS 38 00 485 können Silber und Quecksilber aus diese Metalle enthaltenden austitrierten,d stark schwefelsauren Lösungen für die chemische Sauerstoff-Bedarfsbestimmung abgeschieden werden. Dabei erfolgt die Abscheidung des Silbers und des Quecksilbers aus den genannten Lösungen ausschließlich durch Zementation im Chargenbetrieb, wobei dem Reaktionsbehälter jeweils ganz bestimmte Mengen an Kupfermetall und Lösung in mehreren Chargen zugegeben werden und nach Abschluß der erforderlichen Reaktionszeit von maximal 5 Stunden der Behälter wieder entleert wird, so daß mit der Behandlung der nächsten Charge begonnen werden kann. Zur Durchführung dieses Verfahrens ist es erforderlich, das in dem Reaktionsbehälter verwendete Kupfermetall bis auf eine Korngröße von $\leq 5$ mm zu zerkleinern und außerdem muß in dem Reaktionsbehälter durch ein geeignetes Rührwerk für eine gründliche Durchmischung gesorgt werden.

Dieses Verfahren hat den Nachteil, daß es technisch aufwendig ist und einer intensiven Überwachung durch geeignetes Kontrollpersonal bedarf, da es sehr störanfällig ist.

Aufgabe der Erfindung war es daher, ein Verfahren zu entwickeln, mit dessen Hilfe es möglich ist, aus gebrauchten sowie schwermetallhaltigen Lösungen hochwertige Metalle, insbesondere Edelmetalle und Quecksilber, auf wirtschaftliche und umweltfreundliche Art abzuscheiden und zurückzugewinnen, ohne daß dabei die o. g. Mängel auftreten, sowie eine Vorrichtung zur Anwendung des Verfahrens bereitzustellen.

Diese Aufgabe wird durch die kennzeichnenden Merkmale der Ansprüche 1 und 8 gelöst. Vorteilhafte Ausgestaltungen der Erfindung sind in den Unteransprüchen gekennzeichnet.

Es wurde erfindungsgemäß herausgefunden, daß zur Abscheidung und Rückgewinnung der hochwertigen Metalle, insbesondere Edelmetalle und Quecksilber, aus sie enthaltenden gebrauchten Lösungen eine Kombination aus Zementation und Elektrolyse angewendet wird.

Gegenstand der Erfindung ist ein Verfahren zur Abscheidung und Rückgewinnung hochwertiger Metalle, insbesondere von Edelmetallen und Quecksilber, aus gebrauchten sowie schwermetallhaltigen Lösungen durch Zementation und Elektrolyse, das dadurch gekennzeichnet ist, daß es die folgenden Stufen umfaßt:

(a) die hochwertigen Metalle, insbesondere Edelmetalle und Quecksilber, enthaltende gebrauchte Lösung wird in einen Absetzbehälter eingeführt, in dem sich die festen und flüssigen Schwebstof fe absetzen unter Ausbildung einer homogenen überstehenden Lösung und eines Bodenschlammes, der in regelmäßi gen Abständen aus dem Absetzbehälter abgezogen und nach entsprechender Neutralisation und ausreichender Entwässerung deponiert wird,

(b) die überstehende homogene Lösung in dem Absetzbehälter wird in einen geschlossenen Abscheidereaktor überführt, der mit einer Kathode, beispielsweise einer Kupferwicklung, und einer Anode, beispielsweise einer Platin/Iridium-Netzelektrode versehen ist, die nach der Durchführung durch den Deckel mit einer außerhalb des Abscheidereaktors angeordneten Gleichstromquelle verbunden sind,

(c) die von den hochwertigen Metallen, insbesondere von Edelmetallen und Quecksilber befreite Lösung wird über einen Sicherheitsfilter in einen Speicherbehälter zur Zwischenlagerung und Kontrolle ausgetragen, bevor sie verworfen wird, und

(d) das auf der Kupferwicklung in dem Abscheidereaktor und in dem Sicherheitsfilter abgeschiedene hochwertige Metall, insbesondere Edelmetall und Quecksilber, wird auf an sich bekannte Weise aufgearbeitet.

Bei Durchführung des erfindungsgemäßen Verfahrens entstehen weitgehend metallfreie Lösungen, die gefahrlos verworfen oder wiederverwendet werden können, während die gleichzeitig entstehenden Metallrückstände auf an. sich bekannte Weise aufgearbeitet und einer Wiederverwertung zugeführt werden können. Das erfindungsgemäße Verfahren kann kontinuierlich betrieben werden und erfüllt die höchsten Sicherheitsstandards, da es in einem geschlossenen System durchgeführt wird, das bei Betriebsstörungen automatisch abgeschaltet wird, so daß keine metallhaltigen Lösungen unkontrolliert auslaufen können. Dadurch werden mögliche Umweltbelastungen bei der Behandlung metallhaltiger gebrauchter Lösungen weitgehend ausgeschlossen.

Eine Vorrichtung zur Durchführung des vorstehend beschriebenen Verfahrens ist gekennzeichnet durch einen Absetzbehälter mit einer Zuführungsleitung für die zu behandelnde gebrauchte Lösung und einer Abflußleitung für die darin entstehende homogene Lösung sowie einem Austrag für den darin gebildeten Schlamm, einen geschlossenen Abscheidereaktor mit einer Zuführungsleitung, in der sich eine Pumpe befindet, einer Austragsleitung , eine den Deckel des Abscheidereaktors durchquerende Kupferelektrode und eine weitere, den Deckel des Abscheidereaktors durchquerende Gitterelektrode, beispielsweise aus Platin/Iridium bestehend, die außerhalb des Abscheidereaktors mit einer Gleichstromquelle verbunden sind, einen dem Abscheidereaktor nachgeschalteten Sicherheitsfilter mit einer Zuführungsleitung und einer Austragsleitung, der aus einem durchsichtigen Behälter mit einer Füllung aus fein granuliertem Kupfer besteht, und einen Speicherbehälter mit einer Zulaufleitung.

Die erfindungsgemäße Vorrichtung stellt eine technisch umkomplizierte und daher wenig störanfällige Gesamtanlage dar, die gut überschaubar, einfach zu bedienen und problemlos zu überwachen ist. Sie weist eine hohe Betriebssicherheit auf.

Das erfindungsgemäße Verfahren und die erfindungsgemäße Vorrichtung bieten gegenüber dem bisherigen Stand der Technik die folgenden Vorteile:

- durch Anlegen einer künstlichen Gleichspannung zwischen der Kupferwicklung und der beispielsweise aus Platin/Iridium bestehenden Elektrode erfolgt die Abscheidung der hochwertigen Metalle, insbesondere der Edelmetalle und des Quecksilbers, im Abscheidereaktor nicht nur durch Zementation, sondern zusätzlich auch durch Elektrolyse;

- die Kombination aus Elektrolyse und Zementation führt in Verbindung mit der Art und Betriebsweise des Abscheidereaktors (kontinuierlich beschickter und im Aufstromverfahren mehr oder weniger pfropfendurchströmter Festbett- Reaktor) und des Sicherfilters zu vergleichsweise niedrigen Edelmetall- und Quecksilber-Konzentrationen in der abgehenden Lösung (bei der Entmerkurierung von gebrauchten CSB-Lösungen betragen die Quecksilberkonzentrationen beispielsweise < 0,01 mg/l), einer vergleichsweise hohen Ausnutzung des Kupfers im Abscheidereaktor, zu vergleichsweise hohen Edelmetall- oder Quecksilber-Konzentrationen im Kathodenschlamm und damit zur Sicherstellung einer wirtschaftlichen Aufbereitung und Wiederverwertung der abgeschiedenen Metalle bei gleichzeitiger hoher Abscheidesicherheit;

- Umweltbelastungen bei der Behandlung der metallhaltigen gebrauchten Lösungen sind weitgehend ausgeschlossen, da das gesamte Behandlungssystem vollkommen geschlossen ist, so daß selbst bei Stromausfall oder bei Versagen der Abschaltvorrichtung am Sicherheitsfilter an keiner Stelle Edelmetalle oder Quecksilber unkontrolliert entweichen können, die Beschickungspumpe im Störfall (beispielsweise durch Verstopfung der Rohrleitungen oder der Kupferfüllung im Sicherheitsfilter) automatisch abgeschaltet wird;

- das dem Abscheidereaktor nachgeschaltete Sicherheitsfilter verleiht eine hohe Betriebssicherheit und eine zusätzliche Edelmetall- und Quecksilberabscheidung durch Zementation in dem Sicherheitsfilter und damit verbunden eine gleichbleibend niedrige Edelmetall- und Quecksilber-Abflußkonzentration;

- auch bei Ausfall der Abschaltvorrichtung am Sicherheitsfilter ist durch die Zwischenlagerung und Kontrolle der behandelten Lösung im Speicherbehälter sichergestellt, daß in der abgehenden Lösung keine unzulässig hohe Metallrestkonzentration auftritt;

- die Gesamtanlage ist technisch unkompliziert und daher wenig störanfällig, sie ist gut überschaubar, einfach zu bedienen und problemlos zu überwachen, sie weist insgesamt eine hohe Betriebssicherheit auf;

- das erfindungsgemäße Verfahren ist zur Behandlung aller edelmetall- und quecksilberhaltigen gebrauchten Lösungen einsetzbar, wobei die Abscheidewirkung nicht nur durch Zementation, sondern auch durch Elektrolyse erfolgt;

- der Abscheidereaktor kann kontinuierlich beschickt werden;

- in dem Abscheidereaktor ist bei Durchführung des erfindungsgemäßen Verfahrens keine Durchmischung erforderlich, die technisch kompliziert und störanfällig ist;

- da das gesamte Behandlungssystem bei Durchführung des erfindungsgemäßen Verfahrens vollkommen geschlossen ist, werden mögliche Umweltbelastungen weitgehend vermieden;

Die Erfindung wird nachstehend unter Bezugnahme auf die beiliegende Zeichnung näher beschrieben. Diese zeigt:

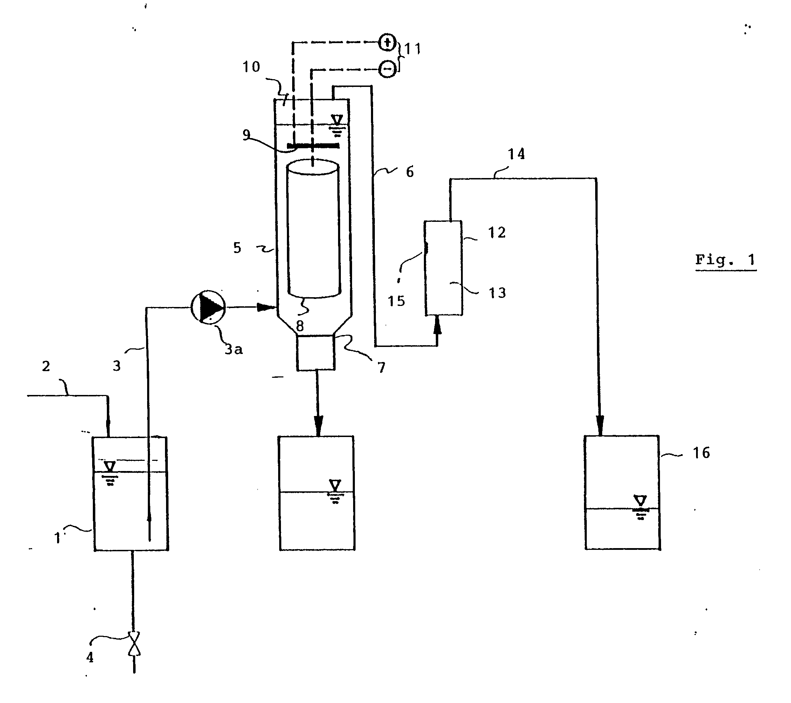

Fig. 1 den Aufbau der erfindungsgemäßen Vorrichtung.

Das erfindungsgemäße Verfahren umfaßt im wesentlichen die Abscheidung und Rückgewinnung der in den gebrauchten sowie schwermetallhaltigen Lösungen enthaltenen hochwertigen Metalle, insbesondere Edelmetalle und Quecksilber, durch Anwendung einer Kombination aus Zementation und Elektrolyse. Die dabei verbleibenden Metallrückstände werden der Aufbereitung und Wiederverwertung zugeführt, die auf an sich bekannte Weise durchgeführt werden.

Die metallhaltige gebrauchte Lösung wird durch eine Zuführungsleitung 2 in einen Absetzbehälter 1 eingeführt, in dem die Abscheidung der absetzbaren Stoffe (feste und flüssige Schwebstoffe) erfolgt (vgl. die beiliegende Zeichnung).

Der sich absetzende Schlamm wird in regelmäßigen Abständen aus dem Absetzbehälter 1 durch den Austrag 4 abgezogen und kann nach ausreichender Entwässerung deponiert werden.

Die Beschickung des Abscheidereaktors 5 mit der von den absetzbaren Stoffen befreiten Lösung erfolgt kontinuierlich durch die Zuführungsleitung 3 mit Hilfe einer in der Leitung 3 angeordneten Pumpe 3a, die automatisch abgeschaltet wird, wenn auf der Druckseite der Pumpe ein vorgegebener Druck überschritten wird.

Der Abscheidereaktor 5 besteht aus einem geschlossenen Behälter aus geeignetem Material, beispielsweise Glas, der im Aufstrom-Verfahren kontinuierlich durcströmt wird (Durchfluß-Reaktor). Dabei erfolgt keine gezielte Durchmischung der Beschickung des Reaktors 5.

Im unteren Teil des Reaktors 5 kann eine beispielsweise großporige, gut flüssigkeitsdurchlässige Schicht aus einem inerten und neutralen Material, in die die Zuführungsleitung 3 hineinragt, vorgesehen sein, wodurch der Abscheidereaktor 5 möglichst gleichmäßig über den Querschnitt durchströmt wird.

Im Abscheidereaktor 5 erfolgt die Abscheidung der hochwertigen Metalle, insbesondere der Edelmetalle und des Quecksilbers, aus den zu behandelnden gebrauchten Lösungen durch Zementation und Elektrolyse, wobei die Zementationswirkung durch die Elektrolysewirkung unterstützt wird.

Die neben der Zementation ablaufende Elektrolyse wird dadurch erzielt, daß zwischen der Kupferwicklung 8, die die Kathode bildet, und der beispielsweise aus einem Platin/Iridium-Gitter bestehenden Elektrode 9 (Anode) eine künstliche Gleichspannung mittels einer außerhalb des Abscheidereaktors 5 angeordneten Gleichspannungsquelle 11 angelegt wird. Die dabei angewendete Gleichspannung liegt beispielsweise in dem Bereich von etwa 1,5 bis etwa 5 Volt, vorzugsweise bei etwa 2 Volt. Bei der Entmerkurierung einer gebrauchten CSB-Lösung ergab sich als die optimale Gleichspannung beispielsweise 2 V.

Die vorzugsweise aus Platin/Iridium bestehende Elektrode 9 (Anode) und die Kupferelektrode 8 (Kathode) durchqueren den Deckel 10 des Behälters 5 und sind in diesem befestigt.

Die Abscheidekapazität der im Abscheidereaktor 5 vorhandenen Kupferwicklung 8 ist begrenzt. Ist diese verbraucht, wird sie durch eine neue ersetzt. Dabei kommt der Reaktordeckel 10 mit den daran befindlichen Elektroden 11 erneut zum Einsatz.

Sich bildender Kathodenschlamm setzt sich im unteren Bereich des Abscheidereaktors 5 in einer Schleuse 7 ab. Er wird nach der Neutralspülung in einem Behälter aufgefangen.

Die von den hochwertigen Metallen, insbesondere Edelmetallen und Quecksilber, weitgehend befreite Lösung (bei der Entmerkurierung gebrauchter CSB-Lösungen wurden Quecksilberablauf-Konzentrationen von < 0,01 mg/l ermittelt) verlassen den Abscheidereaktor 5 über eine Ablaufleitung 6, die direkt mit dem Sicherheitsfilter 12 verbunden ist.

Das aus durchsichtigem Material bestehende Sicherheitsfilter 12 wird durch Ausnutzung des hydrostatischen Überdrucks ebenfalls im Aufstrom-Verfahren kontinuierlich durchflossen. Es ist mit fein granuliertem Kupfer 13 gefüllt. Die Zuflußleitung 6 wird von unten in das Filter geführt und die Abflußleitung 14 befindet sich oben im Filter 12.

Durch den dem Abscheidereaktor 5 nachgeschalteten Filter 12 werden stets sehr niedrige Metall-, insbesondere Edelmetall-oder Quecksilberabflußkonzentrationen sichergestellt, da im Filter eine zusätzliche Abscheidung durch Zementation erfolgt. Mögliche kurzfristig erhöhte Konzentrationen hochwertiger Metalle, insbesondere von Edelmetallen und Quecksilber, im Abfluß 6 des Abscheidereaktors 5 werden somit im Sicherheitsfilter 12 abgeschieden.

Es kann vorgesehen werden, durch Messung des Kupfers 13 im Filter 12 und darüber hinaus durch optische Kontrolle des durchsichtigen Filters 12 die Beschickungspumpe 3a automatisch abzuschalten, wenn ein bestimmter Reflexionsgrad, ge messen mittels der Meßeinrichtung 15, überschritten bzw. eine bestimmte optische Veränderung erkennbar wird. Dies bedeutet in der Regel, daß der Abscheidereaktor 5 beladen ist. Diese Ausgestaltung ist jedoch wahlweise.

Die Zwischenlagerung und Kontrolle der von den hochwertigen Metallen, insbesondere Edelmetallen und Quecksilber, befreiten sowie schwermetallhaltigen Lösung (Abfluß durch die Leitung 14 aus dem Sicherheitsfilter 12) erfolgt in einem Speicherbehälter 16. Dieser Speicherbehälter 16 dient der Zwischenlagerung und nochmaligen Kontrolle der behandelten Lösung, die dann beseitigt oder einem anderen Verwendungszweck zugeführt werden kann.

Die Erfindung wurde zwar vorstehend unter Bezugnahme auf spezifische bevorzugte Ausführungsformen näher erläutert, es ist jedoch für den Fachmann selbstverständlich, daß sie darauf keineswegs beschränkt ist, sondern daß diese in vielfacher Hinsicht abgeändert und modifiziert werden können, ohne daß dadurch der Rahmen der vorliegenden Erfindung verlassen wird.

**Ansprüche**

1. Verfahren zur Abscheidung und Rückgewinnung hochwertiger Metalle, insbesondere von Edelmetallen und Quecksilber, aus gebrauchten sowie schwermetallhaltigen Lösungen durch Zementation und Elektrolyse, **dadurch gekennzeichnet**, daß es die folgenden Stufen umfaßt

(a) die hochwertigen Metalle, insbesondere Edelmetalle und Quecksilber, enthaltende gebrauchte Lösung wird in einen Absetzbehälter eingeführt, in dem sich die festen und flüssigen Schwebstoffe absetzen unter Ausbildung einer homogenen überstehenden Lösung und eines Bodenschlammes, der in regelmäßigen Abständen aus dem Absetzbehälter abgezogen und nach entsprechender Neutralisation und ausreichender Entwässerung deponiert wird,

(b) die überstehende homogene Lösung in dem Absetzbehälter wird in einen geschlossenen Abscheidereaktor überführt, der mit einer Kathode, beispielsweise einer Kupferwicklung, und einer Anode, beispielsweise einer Platin/Iridium-Netzelektrode versehen ist, die nach der Durchführung durch den Deckel mit einer außerhalb des Abscheidereaktors angeordneten Gleichstromquelle verbunden sind,

(c) die von den hochwertigen Metallen, insbesondere von Edelmetallen und Quecksilber befreite Lösung wird über einen Sicherheitsfilter in einen Speicherbehälter zur Zwischenlagerung und Kontrolle ausgetragen, bevor sie verworfen wird, und

(d) das auf der Kupferwicklung in dem Abscheidereaktor und in dem Sicherheitsfilter abgeschiedene hochwertige Metall, insbesondere Edelmetall und Quecksilber, wird auf an sich bekannte Weise aufgearbeitet.

2. Verfahren nach Anspruch 1, **dadurch gekennzeichnet**, daß es kontinuierlich durchgeführt wird.

3. Verfahren nach Anspruch 1 oder 2, **dadurch gekennzeichnet**, daß die Überführung der homogenen Lösung aus dem Absetzbehälter in den Abscheidereaktor mittels einer Pumpe erfolgt, die automatisch gesteuert wird in Abhängigkeit von einem vorgegebenen Maximaldruck auf der Druckseite der Pumpe.

4. Verfahren nach einem der Ansprüche 1 bis 3, **dadurch gekennzeichnet**, daß als Abscheidereaktor ein geschlossener Behälter aus geeignetem Material verwendet wird, der im Aufstrom-Verfahren kontinuierlich durchströmt wird (Durchflußreaktor).

5. Verfahren nach einem der Ansprüche 1 bis 4, **dadurch gekennzeichnet**, daß, nach dem Kupferwicklung verbraucht ist, diese durch eine neue ersetzt wird.

6. Verfahren nach einem der Ansprüche 1 bis 5, **dadurch gekennzeichnet**, daß sich bildender Kathodenschlamm im unteren Bereich des Abscheidereaktors in einer Schleuse absetzt, neutralgespült, in einen Behälter aufgefangen und der Wiederverwertung zugeführt wird.

7. Verfahren nach einem der Ansprüche 1 bis 6, **dadurch gekennzeichnet**, daß dem Abscheidereaktor ein Sicherheitsfilter nachgeschaltet ist, der mit einer fein granulierten Kupferfüllung, einer Zuführungsleitung von unten und einer im oberen Teil befindlichen Abflußleitung ausgestattet und zur optischen Kontrolle aus einem durchsichtigen Material gefertigt ist.

8. Vorrichtung zur Durchführung des Verfahrens nach einem der Ansprüche 1 bis 7, **gekennzeichnet** durch einen Absetzbehälter (1) mit einer Zuführungsleitung (2) für die zu behandelnde gebrauchte Lösung und einer Abflußleitung (3) für die darin entstehende homogene Lösung sowie einem Austrag (4) für den darin gebildeten Schlamm,

einen geschlossenen Abscheidereaktor (5) mit einer Zuführungsleitung (3), in der sich eine Pumpe (3a) befindet, einer Austragsleitung (6), eine den Deckel (10) des Abscheidereaktors (5) durchquerende Kupferelektrode (8) und eine weitere, den Deckel (10) des Abscheidereaktors (5) durchquerende Gitterelektrode (9), beispielsweise aus Platin/Iridium bestehend, die außerhalb des Abscheidereaktors (5) mit einer Gleichstromquelle (11) verbunden sind,

ein dem Abscheidereaktor (5) nachgeschaltetes Sicherheitsfilters (12) mit einer Zuführungsleitung (6) und einer Austragsleitung (14), das aus einem durchsichtigen Behälter mit einer Füllung (13) aus fein granuliertem Kupfer besteht, und
einen Speicherbehälter (16) mit einer Zulaufleitung
(14).

Fig. 1

EP 0 428 918 A1

**Europäisches Patentamt**

# EUROPÄISCHER RECHERCHENBERICHT

Nummer der Anmeldung

## EP 90 12 0953

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | DE-A-2 316 047 (ETUDES ET PROCEDES D'ASSAINISSEMENT PURATR)<br>* Seite 4, Zeilen 5-8; Seite 5, Zeilen 28-32; Seite 8, Zeilen 13-18; Seite 16, Zeilen 3-28; Seite 21, Beispiel 7; Seiten 23-26, Ansprüche; Figur 4 * | 1,2,4 | C 02 F 1/70<br>C 22 B 3/00<br>C 25 C 1/20<br>C 25 C 1/16 |
| Y | EP-A-0 220 811 (296388 B.C. LTD)<br>* Seite 7, Zeilen 21-24; Seite 8, Zeilen 1,2; Seiten 1-3, Ansprüche * | 1,2,4 | |
| A | EP-A-0 190 088 (SURFAX)<br>* Seite 4, Zeile 26 - Seite 7, Zeile 33; Figuren 2-4 * | 1,5 | |
| A | EP-A-0 246 677 (NORDDEUTSCHE AFFINERIE AG)<br>* Das ganze Dokument * | 1,7 | |
| A | US-A-4 367 127 (G.S. MESSING)<br>* Spalte 4, Zeile 24 - Spalte 5, Zeile 67 * | 1,2,3 | |

| | RECHERCHIERTE SACHGEBIETE (Int. Cl.5) |
|---|---|
| | C 02 F 1<br>C 22 B 3<br>C 25 C 1 |

Der vorliegende Recherchenbericht wurde für alle Patentansprüche erstellt

| Recherchenort | Abschlußdatum der Recherche | Prüfer |
|---|---|---|
| Den Haag | 06 Februar 91 | GROSEILLER PH.A. |